# EUROPÄISCHE PATENTSCHRIFT

(11) **EP 1 779 604 B1**
(45) Veröffentlichungstag und Bekanntmachung des Hinweises auf die Patenterteilung: **09.04.2008**
(21) Anmeldenummer: 06777540.3
(22) Anmeldetag: 03.07.2006
(51) Int. Cl.: H04L 12/28, H04Q 7/26

(54) **VERFAHREN ZUM ADMINISTRIEREN EINES SICH AUF MINDESTENS EINE ZELLE ERSTRECKENDEN KOMMUNIKATIONSSYSTEMS ZUR DRAHTLOSEN KOMMUNIKATION MIT SYNCHRONISIERT ZU EINER BASISSTATION ZELLENBESCHRÄNKTER UND/ODER - ÜBERGREIFENDER, DRAHTLOSER DIREKT- KOMMUNIKATIONSMÖGLICHKEIT ZWISCHEN MOBILTEILEN**
METHOD FOR MANAGING A COMMUNICATION SYSTEM EXTENDING OVER AT LEAST ONE CELL FOR WIRELESS COMMUNICATION BETWEEN MOBILE UNITS WITH DIRECT WIRELESS COMMUNICATION POSSIBILITIES LIMITED TO AND/OR EXTENDING OVER A CELL SYNCHRONISED TO A BASE STATION
PROCEDE POUR GERER UN SYSTEME DE COMMUNICATION S'ETENDANT SUR AU MOINS UNE CELLULE POUR COMMUNIQUER SANS FIL, AVEC POSSIBILITE DE COMMUNICATION SANS FIL ET DIRECTE ENTRE DES ELEMENTS MOBILES, DE MANIERE SYNCHRONISEE AVEC UNE STATION DE BASE, LIMITEE A DES CELLULES ET/OU ELARGIE A PLUSIEURS CELLULES

(30) Priorität: 01.07.2005 DE 102005030830
(43) Veröffentlichungstag der Anmeldung: 02.05.2007
(73) Patentinhaber: Siemens Home and Office Communication Devices GmbH & Co. KG, 81379 München (DE)
(72) Erfinder: LENFORT, Christoph, 46399 Bocholt (DE); KEHREN, Dieter, 46539 Dinslaken (DE); HÜLDER, Stefan, 46286 Dorsten-Deuten (DE)
(74) Vertreter: Maier, Daniel Oliver
(86) Internationale Anmeldenummer: PCT/EP2006/063780
(87) Internationale Veröffentlichungsnummer: WO 2007/003616

(56) Entgegenhaltungen:
- EP-A- 1 253 792
- WO-A-98/28937
- WO-A2-00/33507
- "Digital Enhanced Cordless Telecommunications (DECT)" November 2004 (2004-11), ETSI STANDARDS, EUROPEAN TELECOMMUNICATIONS STANDARDS INSTITUTE, SOPHIA-ANTIPO, FR , XP014026887 ISSN: 0000-0001 in der Anmeldung erwähnt Annex I

## Beschreibung

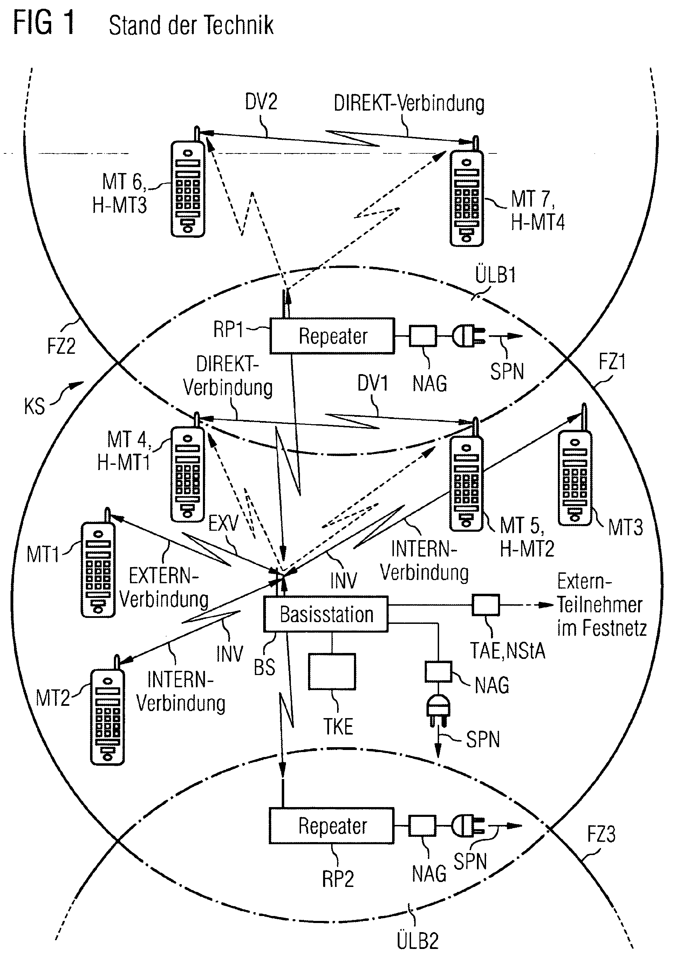

Wie das Verfahren zum Administrieren eines sich auf mindestens eine Zelle erstreckenden Kommunikationssystems zur drahtlosen Kommunikation, vorzugsweise ein DECT-System (**D**igital **E**nhanced **C**ordless **T**elecommunication), mit synchronisiert zu einer Basisstation zellenbeschränkter und/oder -übergreifender, drahtloser Direkt-Kommunikationsmöglichkeit (**D**ECT **D**istributed **C**ommunication, DDC) zwischen Mobilteilen gemäß dem Stand der Technik funktioniert, ist in den FIGUREN 1 bis 4 dargestellt. Dabei wird unter Bezugnahme auf die relevanten Kapitel des DECT-Standards EN 300 175-1...8, November 2004 in die Thematik "Distributed Communication nach dem DECT Standard" eingeführt.

Die FIGUREN 1 bis 4 zeigen:
FIGUR 1 ein DECT-basiertes Mehrzellen-Kommunikationssystem,
FIGUR 2 Zeitschlitzbelegung bei konventioneller INTERN-Verbindung in dem DECT-basierten Mehrzellen-Kommunikationssystem,
FIGUR 3 Zeitschlitzbelegung bei einer DDC-Verbindung in dem DECT-basierten Mehrzellen-Kommunikationssystem,
FIGUR 4 eine für die Administrierung des DECT-basierten Mehrzellen-Kommunikationssystem gemäß dem DECT-Standard zur Verfügung stehende, eindeutige Adressierungsinformation ["Radio Fixed Part Identity" (RFPI)].

In dem DECT-Standard (vgl.: EN 300 175-5, Kapitel I.3.10.2, November 2004) wird beschreiben, dass für "Single Cell"-basierte DECT-Systeme eindeutige **"Id**entity **N**umber" (IdN) aus einem in dem DECT-System zur Verfügung stehenden Nummernbereich, dem so genannten RPN-Bereich **R**adio fixed **P**art **N**umber), allokiert werden können, während für mehrzellenbasierte DECT-Systeme (CMI-basierte DECT-Systeme, **C**ordless **M**ulticell **I**ntegration) lediglich vorgegeben wird, dass bei der Allokation von "**R**adio fixed **P**art **N**umber's" (RPN's) aktiver Festteile oder Basisstationen (**R**adio **F**ixed **P**art, RFP) nicht als "Identity Number" verwendet werden dürfen. Ein Verfahren, wie dieses gewährleistet werden kann, wird jedoch nicht angegeben. Die diesbezüglich im Standard verwendete Formulierung lässt jedoch vermuten, dass für die Allokation eine Administration nötig ist, die bei größeren Business-Systemen (z.B. HICOM-basierte Cordless Systeme) aber auch durchaus üblich ist.

Darüber hinaus ist es möglich, kleine "Single Cell"-basierte DECT-Systeme für den Heimbereich durch die Ergänzung einer Zwischenstation oder Relaisstation, den sogenannten Repeater (**C**ordless **R**adio **F**ixed **P**art, CRFP), zu CMI-basierten DECT-Systemen zu erweitern.

FIGUR 1 zeigt ein solches CMI-basiertes DECT-Kommunikationssystem KS. Das mehrzellige Kommunikationssystem KS weist eine erste Funkzelle FZ1 auf, die als Funkversorgungsbereich für eine DECT-Basisstation BS dient und in der neben der Basisstation BS fünf Mobilteile MT1...MT5 angeordnet sind, die allesamt funktechnisch mit der Basisstation BS verbunden sind. Die Basisstation BS, die zur Stromversorgung über ein Netzanschlussgerät NAG an ein Spannungsnetz SPN angeschlossen ist, ist entweder über eine Telekommunikationsanschlusseinheit TAE oder eine Nebenstellenanlage NStA mit dem Festnetz verbunden. Darüber hinaus ist an der Basisstation BS ein Telekommunikationsendgerät TKE angeschlossen, das vorzugsweise als Klingelanlage, Faxgerät, Personal Computer etc. ausgebildet sein kann.

Von den fünf Mobilteilen MT1...MT5 unterhält ein erstes Mobilteil MT1 über die Basisstation BS eine EXTERN-Verbindung EXV zu einem Extern-Teilnehmer im Festnetz, während ein zweites Mobilteil MT2 und ein drittes Mobilteil MT3 für eine systeminterne Kommunikation jeweils eine INTERN Verbindung INV zur Basisstation BS unterhält. Neben dieser INTERN-Verbindung INV zwischen dem zweiten Mobilteil MT2 und dem dritten Mobilteil MT3 gibt es in der ersten Funkzelle FZ1 des Kommunikationssystems KS noch eine erste DIREKT-Verbindung DV1 zwischen einem vierten Mobilteil MT4 und einem fünften Mobilteil MT5.

Wegen dieser zusätzlichen Direktverbindungsmöglichkeit zwischen dem vierten Mobilteil MT4 und dem fünften Mobilteil MT5 (Distributed Communication) spricht man bei dem Kommunikationssystem KS gemäß dem DECT-Standard (vgl.: EN 300 175-5 V1.8.1, November 2004, Annex I) von einem "Distributed Communication DECT Local Network (DCDL-Net)". Die Teilnehmer eines "Distributed Communication DECT Local Network", die eine DIREKT-Verbindung aufbauen können, werden als "Member" bezeichnet und müssen die Fähigkeiten sowohl einer "Portable Termination (PT)" als auch einer "Fixed Termination (FT)" haben. Sie werden deshalb auch als Hybrid-Mobilteile bezeichnet, so dass das vierte Mobilteil MT4 ein erstes Hybrid-Mobilteil H-MT1 und das fünfte Mobilteil MT5 ein zweites Hybrid-Mobilteil H-MT2 ist. Die Rolle des "Master" in dem "Distributed Communication DECT Local Network" kann im Prinzip von jedem "DCDL-Net"-Terminal, also auch "Member" übernommen werden. Allerdings wird sie vorzugsweise, weil nahe liegend, durch die Basisstation des "Distributed Communication DECT Local Network" wahrgenommen.

Zusätzlich zu der ersten Funkzelle FZ1 weist das Kommunikationssystem KS im Zuge der Erweiterung von einem "Single Cell"-System zu einem "Multi-Cell"-System noch zwei weitere Funkzellen, eine zweite Funkzelle FZ2 und eine dritte Funkzelle FZ3 auf. In einem ersten Überlappungsbereich ÜLB1 zwischen der ersten Funkzelle FZ1 und der zweiten Funkzelle FZ2 und in einem zweiten Überlappungsbereich ÜLB2 zwischen der ersten Funkzelle FZ1 und der dritten Funkzelle FZ3 befinden sich als Zwischenstation oder Relaisstation ausgebildete Repeater, ein erster Repeater RP1 im ersten Überlappungsbereich ÜLB1 und ein zweiter Repeater RP2 im zweiten Überlappungsbereich ÜLB2. Beide Repeater RP1, RP2 sind wie die Basisstation BS in der ersten Funkzelle FZ1 über ein Netzanschlussgerät NAG an ein Spannungsnetz SPN angeschlossen. Der erste Repeater RP1 ist funktechnisch mit zwei weiteren Mobilteilen, einem sechsten Mobilteil MT6 und einem siebten Mobilteil MT7 verbunden, die sich beide außerhalb der ersten Funkzelle FZ1 in der zweiten Funkzelle FZ2 befinden. Zwischen dem sechsten Mobilteil MT6 und dem siebten Mobilteil MT7 besteht eine zweite DIREKT-Verbindung DV2, weshalb das sechste Mobilteil MT6 als drittes Hybrid-Mobilteil H-MT3 und das siebte Mobilteil MT7 als viertes Hybrid-Mobilteil H-MT4 bezeichnet wird.

Die Basisstation BS, die als "Master" des Kommunikationssystems KS jedem "Member" in der ersten und zweiten Funkzelle FZ1, FZ2 des Kommunikationssystems KS eine "**I**dentity **N**umber" (IdN) zuzuweisen hat, besitzt jedoch bezüglich des dritten und vierten Hybrid-Mobilteils H-MT3, H-MT4 in der zweiten Funkzelle FZ2 keine Kenntnis darüber, welche "Radio fixed Part Number's" durch den ersten Repeater RP1 allokiert werden. Andererseits hat der erste Repeater RP1 beim Allokationsprozess der "Radio fixed Part Number" keine Kenntnis darüber, welche "Radio fixed Part Number" bereits als "Identity Number" blockiert ist. Eine kollisionsfreie Vergabe der "Identity Number" und "Radio fixed Part Number" ist also nur durch eine übergeordnete Administration zu lösen, die man bei kleinen DECT-Systemen für den Heimmarkt in der Regel nicht implementieren will oder kann.

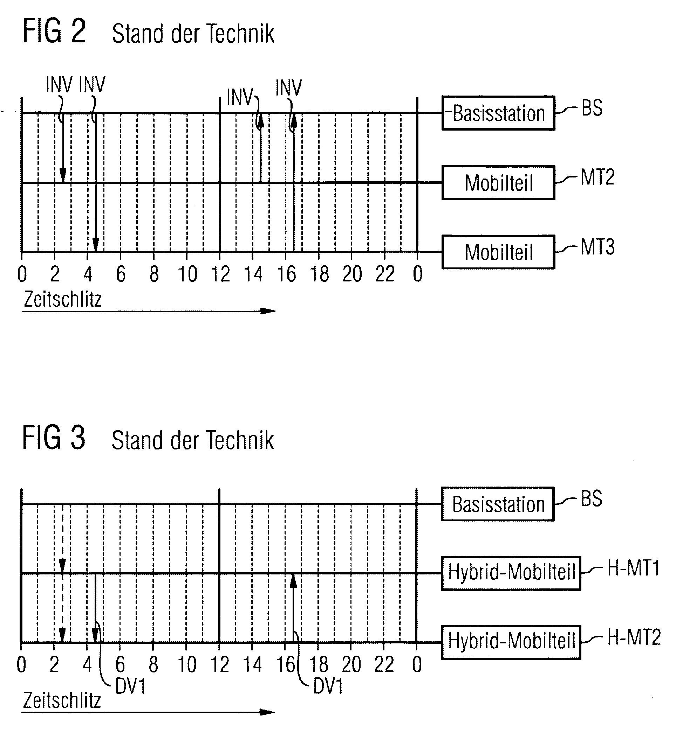

FIGUR 2 zeigt, wie die Ressource "Zeit" bei der INTERN-Verbindung INV als konventionelle Verbindungsmöglichkeit zwischen zwei Mobilteilen, hier z.B. das zweite Mobilteil MT2 und das dritte Mobilteil MT3, in dem DECT-basierten Mehrzellen-Kommunikationssystem KS belegt wird (Zeitschlitzbelegung).

Interne Verbindungen in DECT-basierten Kommunikationssystemen sind in der Regel so gelöst, dass beide Teilnehmer respektive beide Mobilteile eine Verbindung zur Basisstation haben, die die beiden Datenströme verbindet. Da bei einer INTERN-Verbindung durch die Basisstation mehr Bandbreite belegt wird, als für die Nutzdatenübertragung eigentlich nötig ist - es wird die doppelte Bandbreite belegt - und gleichzeitig die für die Basisstation zur Verfügung stehende Bandbreite begrenzt ist, erweist sich der Aufbau einer INTERN-Verbindung insbesondere dann als nachteilig, wenn interne Verbindungen mit höherem Datenaufkommen hergestellt werden sollen.

Zum Aufbau der INTERN-Verbindung INV zwischen den Mobilteilen MT2, MT3 in dem Kommunikationssystem KS nach der FIGUR 1 werden gemäß der FIGUR 2 z.B. folgende Zeitschlitze belegt: Für die Verbindung (Duplex-Verbindung) zwischen der Basisstation BS und dem zweiten Mobilteil MT2 werden die Zeitschlitze "2" und "14" verwendet, während für die Verbindung (Duplex-Verbindung) zwischen der Basisstation BS und dem dritten Mobilteil MT3 die Zeitschlitze "4" und "16" belegt werden.

FIGUR 3 zeigt, wie die Ressource "Zeit" bei den DIREKT-Verbindungen (Distributed Communications) DV1, DV2 als direkte, unmittelbare Verbindungsmöglichkeit zwischen zwei Hybrid-Mobilteilen, hier z.B. das erste Mobilteil H-MT1 und das zweite Mobilteil H-MT2 bzw. das dritte Mobilteil H-MT3 und das vierte Mobilteil H-MT4, in dem DECT-basierten Mehrzellen-Kommunikationssystem KS belegt wird (Zeitschlitzbelegung).

Für die Aufbau einer "Distributed Communication" muss mindestens das zu rufende Hybrid-Mobilteil ein "Idle Receiver Scanning" nach "Bearer-Request-Messages" durchführen, wie es in dem DECT-Standard (vgl.: EN 300 175-3, Absatz 11.8, November 2004) für Basisstationen beschrieben ist.

Da dieses "Idle Receiver Scanning" sehr energieaufwendig ist, werden Hybrid-Mobilteil das "Idle Receiver Scanning" in der Regel nicht permanent durchführen. Ein zu rufendes Hybrid-Mobilteil wird in einer nahe liegenden Ausführung ein "Idle Receiver Scanning" erst dann starten, wenn es auf anderem Wege dazu aufgefordert worden ist. Der DECT-Standard sieht dafür eine Prozedur "Indirect Link Establishment" vor (vgl.: EN 300 175-5, Absatz I.3.8, November 2004).

Alternativ kann auch eine konventionelle Intern-Verbindung dazu benutzt werden, den Aufbau einer "Distributed Communication" einzuleiten, also auch das "Idle Receiver Scanning" beim zu rufenden Hybrid-Mobilteil zu aktiveren. Diese Alternative ist bei bisherigen GIGASET-Schnurlostelefonen bevorzugt eingesetzt worden, um den Änderungsaufwand und Vorleistungen in der Basisstation der Telefone zu minimieren.

Für den weiteren Verbindungsaufbau einer "Distributed Communication" können dann die bekannten Regeln für einen "Connection- und Bearer-Setup" angewandt werden, wie sie in dem DECT-Standard (vgl.: EN 300 175-3, Kapitel 10.2 und 10.5, November 2004) beschrieben sind. Innerhalb dieser Prozeduren verhält sich das rufende Hybrid-Mobilteil wie ein gewöhnliches Mobilteil (Portable Part) und das gerufene Hybrid-Mobilteil wie eine Basisstation (Fixed Part).

Die Zeitschlitzbelegung für die erste DIREKT-Verbindung DV1 zwischen dem ersten Mobilteil H-MT1 und dem zweiten Mobilteil H-MT2 in dem Kommunikationssystem KS gemäß der FIGUR 1 erfolgt entsprechend den vorstehenden Ausführungen gemäß der FIGUR 2 z.B. folgendermaßen:
Für die Übertragung der "Bearer-Request-Messages" von der Basisstation BS an das erste Hybrid-Mobilteil H-MT1 und/oder an das zweite Hybrid-Mobilteil H-MT2 wird der Zeitschlitz "2" verwendet, während für den "Connection- und Bearer-Setup" der DIREKT-Verbindung DV1 zwischen dem ersten Hybrid-Mobilteil H-MT1 und dem zweiten Hybrid-Mobilteil H-MT2 die Zeitschlitze "4" und "16" belegt werden.

Die Zeitschlitzbelegung für die zweite DIREKT-Verbindung DV2 zwischen dem dritten Mobilteil H-MT3 und dem vierten Mobilteil H-MT4 in dem Kommunikationssystem KS gemäß der FIGUR 1 erfolgt, wenngleich in der FIGUR 2 nicht dargestellt, im Prinzip analog, wobei der "Master" in diesem Fall nicht die Basisstation BS, sondern der erste Repeater RP1 ist.

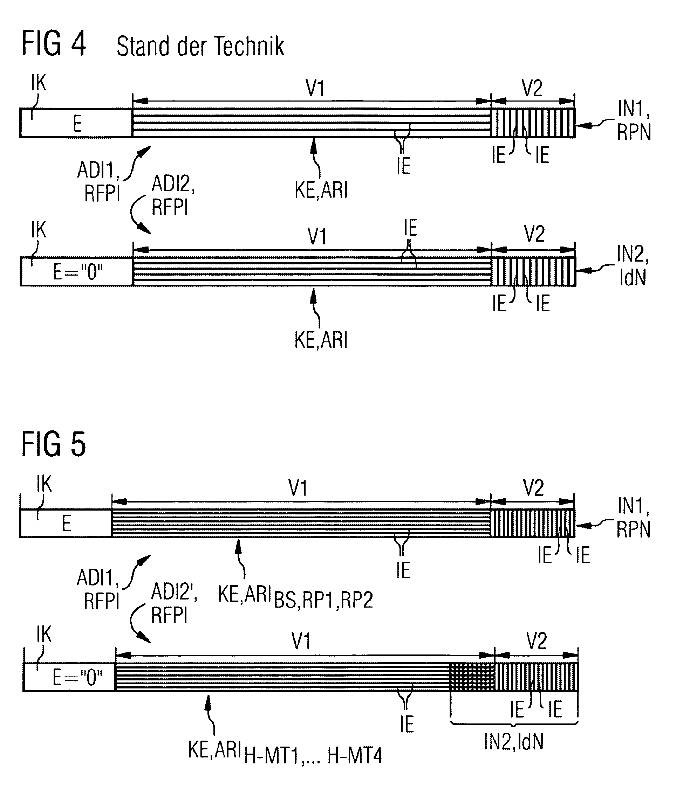

FIGUR 4 zeigt eine für die Administrierung des DECT-basierten Mehrzellen-Kommunikationssystem KS verwendete eindeutige Adressierungsinformation ["Radio Fixed Part Identity" (RFPI)]. Bevor im Einzelnen auf die Adressierungsinformation und deren Inhalt eingegangen wird, vorab noch ein paar allgemeine auf den DECT-Standard bezogene Bemerkungen zu diesen Adressierungsinformationen im Zusammenhang mit der "Distributed Communication".

Für das "Idle Receiver Scanning" und die "Connection- und Bearer-Setup"-Prozedur im Rahmen des Aufbaus der "Distributed Communication" ist es wichtig, dass die einzelnen Hybrid-Mobilteile (Member) eindeutig identifizierbar sind.

Für die "Bearer-Setup"-Prozedur werden Identitäten "**R**adio **F**ixed **P**art **I**dentity (RFPI)" und "**F**ixed **P**art **M**AG **ID**entity(FMID)" benötigt, wobei die "Fixed Part MAC IDentity" nur die letzten 12 Bits der "Radio Fixed Part Identity" darstellt. Die "Radio Fixed Part Identity", mit der ein "Member" den Aufbau einer "Distributed Communication" betreibt, ergibt sich gemäß dem DECT-Standard (vgl.: EN 300 175-5, Kapitel I.3.10.2, November 2004) aus einer "**A**ccess **R**ights **I**dentity (ARI)" des "Master" (Basisstation) und der eindeutigen **"Id**entity **N**umber" (IdN) eines jeden "Member" (Hybrid-Mobilteil).

Die "Identity Number" ist somit die Endnummer der "Radio Fixed Part Identity", die das Hybrid-Mobilteil für die "Distributed Communication" verwendet, sofern das Hybrid-Mobilteil der gerufene Teilnehmer der "Distributed Communication" ist und in der "Connection-Setup"-Prozedur deshalb die Rolle des "Fixed Part" übernimmt.

Die "Identity Number" ist aber auch sehr ähnlich der "Radio fixed Part Number" (RPN) eines konventionellen Festteils bzw. einer konventionellen Basisstation (vgl.: EN 300 175-6, Kapitel 5, November 2004). Die "Radio fixed Part Number" ist für die im DECT-Standard definierten "Access Rights Classes bei einer "Access Rights Class A" 3 Bit und bei "Access Rights Classes B, C, D, E" jeweils 8 Bit breit. Die "Identity Number" ist nach dem DECT-Standard (vgl.: EN 300 175-5, Kapitel 1.3.10.1, November 2004) grundsätzlich 8 Bit breit. Allerdings schränkt Kapitel I.3.10.2 des DECT-Standards die Benutzung der "Identity Number" für die "Access Rights Class A" ebenfalls auf die letzten 3 Bit ein.

Nach dem DECT-Standard (vgl.: EN 300 175-5, Kapitel I.3.2 und I.3.10.3, November 2004) wird die "Identity Number" dem einzelnen "Member" vom "Master" im Rahmen einer "Membership Access Rights Allocation"-Prozedur zugewiesen.

Grundsätzlich gilt hierfür die Anforderung, dass die verwendete "Radio fixed Part Number" nicht als "Identity Number" wieder verwendet werden darf. Dies gilt auch für die zuvor genannten "Single Cell"-Systeme, bei denen die jeweilige Basisstation bereits eine "Radio fixed Part Number" allokiert hat, die somit für die Verwendung als "Identity Number" blockiert ist.

Zur Administrierung des DECT-basierten Mehrzellen-Kommunikationssystem KS wird gemäß der FIGUR 4 eine erste Adressierungsinformation ADI1 für die Basisstation BS und die Repeater RP1, RP2 zur Identifikation von Kommunikationsverbindungen verwendet, während eine zweite Adressierungsinformation ADI2 für die "Member" zu deren jeweiligen Identifikation verwendet wird.

Die Adressierungsinformation ADI1, ADI2 enthält Informationseinheiten IE, die vorzugsweise als Bits auf einen Informationskopf IK, dem so genannten Header, einen vorgegebenen - im Sinne von einmalig festlegbar - ersten Vorrat V1 und einen veränderbaren zweiten Vorrat V2 in der genannten Reihenfolge verteilt sind.

Die in dem Informationskopf IK der ersten Adressierungsinformation ADI1 enthaltenen Bits haben einen beliebigen Wert "E", während die in dem Informationskopf IK der zweiten Adressierungsinformation ADI2 enthaltenen Bits einen Wert "E=0" haben.

Die Informationseinheiten IE, die in den ersten Vorräten V1 der Adressierungsinformation ADI1, ADI2 enthalten sind, bilden eine Kennung KE, die im vorliegenden Fall, wo es sich bei dem Kommunikationssystem KS um ein DECT-System handelt, im wesentlichen der "**A**ccess **R**ights **I**dentity" ARI entspricht.

Die Informationseinheiten IE, die in dem zweiten Vorrat V2 der ersten Adressierungsinformation ADI1 enthalten sind, bilden eine erste Identifikationsnummer IN1, wohingegen die Informationseinheiten IE, die in dem zweiten Vorrat V2 der zweiten Adressierungsinformation ADI2 enthalten sind, eine zweite Identifikationsnummer IN2 bilden.

Die Adressinformation ADI1, ADI2', die Kennung KE, die erste Identifikationsnummer IN1 und die zweite Identifikationsnummer IN2 entsprechen jeweils im Wesentlichen der im DECT-Standard spezifizierten "Radio Fixed Part Identity" RFPI, dem "Access Rights Identifier" ARI, der "Radio Fixed Part Number" RPN und der "Identity Number" IdN, während die Größe des zweiten Informationseinheitenvorrates IE, V2 gemäß dem DECT-Standard vorzugsweise drei oder acht Bit beträgt.

Wie bereits eingangs erwähnt, besteht bei "Single Cell"-Systemen normalerweise keine Gefahr der Kollision der "Identity Number" mit der aktiven "**R**adio fixed **P**art **N**umber" (RPN), weil der gesamte RPN-Bereich mit Ausnahme der "Radio fixed Part Number" der einzigen Basisstation für die Allokation von "Identity Number" zur Verfügung steht und dieser RPN-Bereich in der Regel ausreicht.

Für DECT basierte Mehrzellen-Kommunikationssysteme gilt diese Aussage so nicht.

Im DECT-Standard ist hinsichtlich solcher Mehrzellen-Kommunikationssysteme lediglich die Anforderung nicht kollidierender "Identity Number" und "Radio fixed Part Number" beschrieben und es wird angedeutet, dass das Kollisionsproblem scheinbar nur durch eine übergeordnete Administration zu lösen ist, die sich für herkömmlich DECT-Schnurlostelefone (kleine Heimanlagen) kaum rechnen dürfte.

Nach den Vorgaben im DECT-Standards (vgl.: EN 300 175-5, Annex I, November 2004) unterscheiden sich "**R**adio **F**ixed **P**art **I**dentities (RFPI)" von Hybrid-Mobilteilen und "**R**adio **F**ixed **P**art **I**dentities (RFPI)" von Basisstationen eines DECT-Systems lediglich im RPN-Bereich. "Radio fixed Part Number" und "Identity Number" müssen also so administriert werden, dass sie nicht kollidieren.

Die der Erfindung zugrunde liegende Aufgabe besteht darin, ein Verfahren zum Administrieren eines sich auf mindestens eine Zelle erstreckenden Kommunikationssystems zur drahtlosen Kommunikation mit synchronisiert zu einer Basisstation zellenbeschränkter und/oder -übergreifender, drahtloser Direkt-kommunikationsmöglichkeit zwischen Mobilteilen anzugeben, bei dem zwei für die Administrierung des Kommunikationssystems mit der gegebenen Direktkommunikationsmöglichkeit zwischen den Mobilteilen benutzte Identifikationsnummern, die beide einem gemeinsamen Nummernvorrat entstammen, nicht kollidieren.

Diese Aufgabe wird durch die Verfahrensmerkmale des Patentanspruches 1 gelöst.

Die der Erfindung zugrunde liegende Idee besteht darin, dass von einer für die Administrierung eines zellularen Kommunikationssystems mit zellenbeschränkter und/oder -übergreifender, drahtloser Direktkommunikationsmöglichkeit zwischen Mobilteilen verwendeten eindeutigen Adressierungsinformation mindestens eine Informationseinheit eines ersten Informationseinheitenvorrates einem zweiten Informationseinheitenvorrat für die Bildung einer von zwei Identifikationsnummern derart zugeschlagen wird, dass für die Bildung der besagten Identifikationsnummer nunmehr auf eine größere Anzahl von Informationseinheiten zurückgegriffen werden kann, ohne dass dabei die Größe der Vorräte verändert wird und für die eindeutige Adressierungsinformation ein Abgleich zwischen den beiden Identifikationsnummern erforderlich ist.

Handelt es sich dabei um ein "Distributed Communication DECT Local Network", so wird das mit dieser Maßnahme verfolgte Ziel erreicht, eine gegenseitige Blockade bei der Verwendung einer "Radio fixed Part Number" und einer "Identity Number" in dem "Distributed Communication DECT Local Network" zu verhindern.

Die Erfindung beschreibt ein Verfahren, wie "Identity Number" ohne Kenntnis im System benutzter "Radio fixed Part Number" und teilweise abweichend von den im DECT-Standard (vgl.: EN 300 175-5, Kapitel I, November 2004) beschriebenen Regeln allokiert werden können, ohne dass es zu einer Kollision zwischen den beiden Identifikationsnummern kommt.

Die Trennung von "Radio Fixed Part Identities" für die Mobilteile mit Direktkommunikationsfähigkeit, den Hybrid-Mobilteilen, und "Radio Fixed Part Identities" für Basisstationen und Repeater wird durch unterschiedliche "Access Rights Identifier (ARI)" in den Radio Fixed Part Identities" erzielt. Die Vergabe/Reservierung weiterer "Access Rights Identifier (ARI)" für die Hybrid-Mobilteile ist nur nötig, um mehr Codierungen für "Identity Number" zu reservieren, die ohne Abgleich mit den verwendeten "Radio fixed Part Number" zu eindeutigen "Radio Fixed Part Identities" führen.

Die "Identity Number" ist dazu nicht nur beschränkt auf den RPN-Bereich der "Radio Fixed Part Identity", sondern muss auch noch den hinteren Teil des "Access Rights Identifier" überdecken. Das ist bei "Access Rights Class A" mit einer 3 Bit breiten "Radio fixed Part Number" und einer 8 Bit breiten "Identity Number" einfach möglich. Für die höheren "Access Rights Classes" mit einer 8 Bit breiten "Radio fixed Part Number" muss die "Identity Number" entsprechend breiter codiert sein.

Einziger eindeutiger "Access Rights Identifier" für das "Distributed Communication DECT Local Network", für die Synchronisation und die Prüfung des Zugriffsrechts bleibt weiterhin der "Access Rights Identifier" der Basisstation (des "Master"). Der "Access Rights Identifier" muss für die meisten "Access Rights Classes" weltweit einmalig sein (vgl.: EN 300 175-6, Kapitel 5.1). Das stellt in der Regel der Hersteller in der Fertigung sicher. Vergibt der "Master", wie in dieser Erfindung, "Identity Number", so dass implizit weitere "Access Rights Identifier" für die Hybrid-Mobilteile allokiert werden, so muss der Hersteller diese weiteren "Access Rights Identifier" ebenfalls für diesen "Master" reservieren, um sicherzustellen, dass auch diese weiteren "Access Rights Identifier" weltweit einmalig sind.

Die durch diese Erfindung erzielte Trennung der "Radio Fixed Part Identities" für Hybrid-Mobilteile und konventionelle "Radio Fixed Part Identities" (Repeater und/oder Basisstation) erübrigt eine aufwendige Administration der "Identity Number"- und "Radio fixed Part Number"-Vergabe, die bei Schnurlostelefonen (kleinen Heimanlagen) unter Wirtschaftlichkeitsgesichtspunkten nicht zu leisten wäre.

Die "Identity Number" wird nicht wie im DECT-Standard (vgl.: EN 300 175-5, Kapitel I, November 2004) beschrieben, im RPN-Bereich der "Radio Fixed Part Identity" allokiert, wodurch ein Abgleich zwischen "Radio fixed Part Number"- und "Identity Number"-Vergabe nötig wäre, um doppelte Vergaben zu vermeiden. Die "Identity Number" für Hybrid-Mobilteile werden so gewählt, dass sie auch den hinteren Teil des "Access Rights Identifier" überdecken und sich in diesem Teil von dem "Access Rights Identifier" bereits vorhandener "Radio Fixed Part Identities" unterscheiden. Auf diese Weise können "Identity Number"- und "Radio fixed Part Number"-Vergabe in einem "Distributed Communication DECT Local Network" völlig entkoppelt voneinander betrieben werden.

Vorteilhafte Weiterbildungen der Erfindung sind in den abhängigen Patentansprüchen (Unteransprüchen) angegeben.

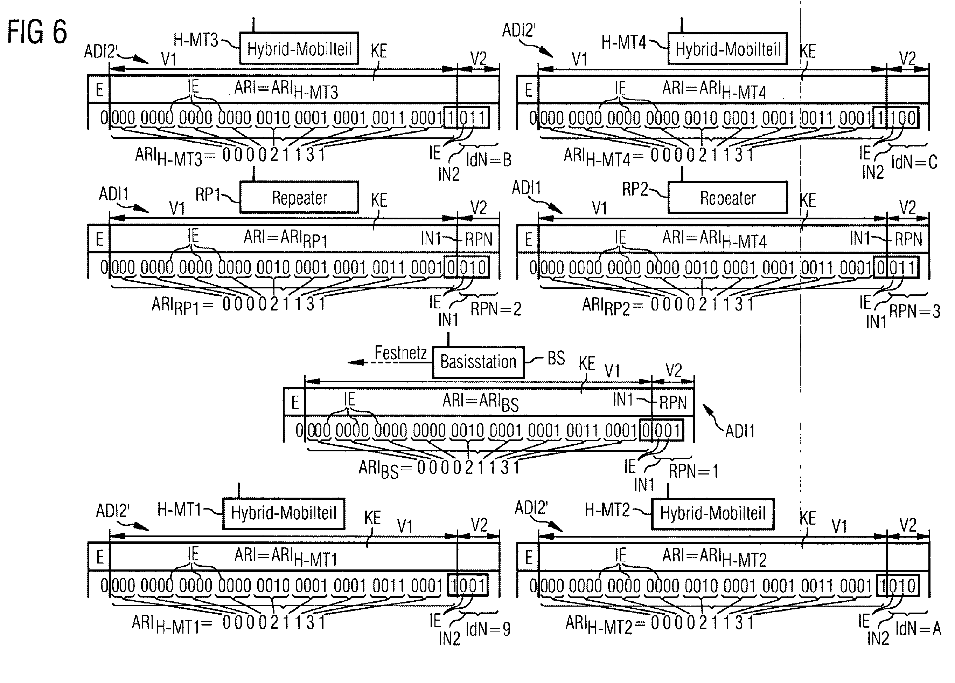

Ein Ausführungsbeispiel der Erfindung wird ausgehend von den FIGUREN 1 bis 4 anhand der FIGUREN 5 und 6 beschrieben. Es zeigen:

FIGUR 5 ausgehend von der FIGUR 4 eine eindeutige Adressierungsinformation ["Radio Fixed Part Identity" (RFPI)] - die unveränderte erste Adressierungsinformation und eine modifizierte zweite Adressierungsinformation, für die Administrierung des DECT-basierten Mehrzellen-Kommunikationssystems,

FIGUR 6 Codierung der in der FIGUR 5 dargestellten eindeutigen Adressierungsinformation ["Radio Fixed Part Identity" (RFPI)] für die Administrierung des in der FIGUR 1 dargestellten DECT-basierten Mehrzellen-Kommunikationssystems.

FIGUR 5 zeigt ausgehend von der FIGUR 4 eine eindeutige Adressierungsinformation ["Radio Fixed Part Identity" (RFPI)] - die unveränderte erste Adressierungsinformation ADI1 für die Basisstation BS und die Repeater RP1, RP2 und eine gegenüber der zweiten Adressierungsinformation ADI2 in der FIGUR 4 modifizierte Adressierungsinformation ADI2' für die Hybrid-Mobilteile H-MT1, H-MT2, H-MT3, H-MT4 - zur Administrierung des DECT-basierten Mehrzellen-Kommunikationssystem KS. Die Modifizierung der zweiten Adressierungsinformation ADI2 ist notwendig, damit die in einem "Distributed Communication DECT Local Network" verwendete "Radio fixed Part Number" eine Verwendung der "Identity Number" nicht blockiert und umgekehrt. Die ansonsten in Bezug auf die FIGUR 4 gemachten allgemeinen auf den DECT-Standard bezogenen Bemerkungen zu der eindeutigen Adressierungsinformation im Zusammenhang mit der "Distributed Communication" gelten analog für die modifizierte zweite Adressierungsinformation ADI2'.

Der Unterschied zwischen der zweiten Adressierungsinformation ADI2 und der modifizierten zweiten Adressierungsinformation ADI2' besteht darin, dass bei der modifizierten Adressierungsinformation ADI2' von dem ersten Vorrat V1 an Informationseinheiten IE mindestens eine Informationseinheit IE dem zweiten Vorrat V2 an Informationseinheiten IE für die Bildung der zweiten Identifikationsnummer IN2 zugeschlagen wird.

Dadurch, dass für die Bildung der zweiten Identifikationsnummer IN2 nunmehr auf eine größere Anzahl von Informationseinheiten IE zurückgegriffen werden kann, ohne dass dabei die Größe der Vorräte V1, V2 verändert wird, wird das mit dieser Maßnahme verfolgte Ziel, eine gegenseitige Blockade bei der Verwendung der "Radio fixed Part Number" und der "Identity Number" in einem "Distributed Communication DECT Local Network" zu verhindern, erreicht.

Die erste Identifikationsnummer IN1 (vgl. Ausführungen zur ersten Adressierungsinformation ADI in der FIGUR 4) wird vorzugsweise bei der Inbetriebnahme des Kommunikationssystems KS durch den Systembetreiber vergeben.

Die zweite Identifikationsnummer IN2 wird vorzugsweise bei der direkten oder indirekten Anmeldung des betreffenden Mobilteils H-MT1, H-MT2, H-MT3, H-MT4 an der Basisstation BS durch die Basisstation BS vergeben. Mit der indirekten Anmeldung ist wieder die Anmeldung über den Repeater RP1, RP2 gemeint.

Die Größe des zweiten Informationseinheitenvorrates IE, V2, beträgt je nach Typ des Kommunikationssystems KS mindestens zwei Bit, wobei der jeweilige Typ des Kommunikationssystems KS in der Kennung KE codiert ist.

Die Adressinformation ADI1, ADI2', die Kennung KE, die erste Identifikationsnummer IN1 und die zweite Identifikationsnummer IN2 entsprechen wieder jeweils im Wesentlichen der im DECT-Standard spezifizierten "Radio Fixed Part Identity" RFPI, dem "Access Rights Identifier" ARI, der "Radio Fixed Part Number" RPN und der "Identity Number" IdN, während die Größe des zweiten Informationseinheitenvorrates IE, V2 gemäß dem DECT-Standard vorzugsweise drei oder acht Bit beträgt.

FIGUR 6 zeigt zur Administrierung des in der FIGUR 1 dargestellten DECT-basierten Mehrzellen-Kommunikationssystems KS eine mögliche Codierung der in der FIGUR 5 dargestellten eindeutigen Adressierungsinformation ["Radio Fixed Part Identity" (RFPI)] - die unveränderte erste Adressierungsinformation ADI1 der Basisstation BS und der Repeater RP1, RP2 und die modifizierte zweite Adressierungsinformation ADI2' der Hybrid-Mobilteile H-MT1...H-MT4. Die Codierungswerte sind in der nachfolgenden Tabelle im Hex-Code dargestellt.

| Gerätetyp | ADI1,ADI2' (RFPI) | ARI | IdN | RPN |
|---|---|---|---|---|
| BS | 0 000021131 1 | 000021131 | | 1 |
| RP1 | 0 000021131 2 | 000021131 | | 2 |
| RP2 | 0 000021131 3 | 000021131 | | 3 |
| H-MT1 | 0 000021131 9 | 000021131 | 9 | |
| H-MT2 | 0 000021131 A | 000021131 | A | |
| H-MT3 | 0 000021131 B | 000021131 | B | |
| H-MT4 | 0 000021131 C | 000021131 | C | |

## Patentansprüche

1. Verfahren zum Administrieren eines sich auf mindestens eine Zelle (FZ1, FZ2, FZ3) erstreckenden Kommunikationssystems (KS) zur drahtlosen Kommunikation mit synchronisiert zu einer Basisstation (BS) zellenbeschränkter und/oder -übergreifender, drahtloser Direktkommunikationsmöglichkeit (DV1, DV2) zwischen Mobilteilen (H-MT1, H-MT2, H-MT3, H-MT4) mit folgenden Merkmalen:
a) Von einer für die Administrierung des Kommunikationssystems (KS) eindeutigen Adressierungsinformation (ADI1, ADI2', RFPI) mit einem ersten Vorrat (V1) und einem dem ersten Vorrat (V1) nachfolgenden zweiten Vorrat (V2) von Informationseinheiten (IE) wird mindestens eine Informationseinheit (IE) des ersten Vorrats (V1), die jeweils zu den Informationseinheiten (IE) des zweiten Vorrats (V2) jeweils nächstliegend ist, dem zweiten Vorrat (V2) zum Zwecke des Merkmals c) zugeschlagen,
b) eine zur Identifikation von Basisstationen und/oder Repeatern (BS, RP1, RP2) in einer Zelle (FZ1, FZ2, FZ3,) des Kommunikationssystems (KS) benutzte erste Identifikationsnummer (IN1, RPN) wird aus dem zweiten Informationseinheitenvorrat (IE, V2) gebildet,
c) eine zur Identifikation von Mobilteilen (H-MT1, H-MT2, H-MT3, H-MT4) mit einer Direkt-Kommunikationsfähigkeit (DV1, DV2) benutzte zweite Identifikationsnummer (IN2, IdN) wird aus dem zweiten Informationseinheitenvorrat (IE, V2) und der diesem Vorrat (IE, V2) zugeschlagenen Informationseinheit (IE) des ersten Informationseinheitenvorrats (IE, V1) gebildet.

2. Verfahren nach Anspruch 1, **dadurch gekennzeichnet, dass** die erste Identifikationsnummer (IN1, RPN) bei der Inbetriebnahme des Kommunikationssystems (KS) durch den Systembetreiber vergeben wird.

3. Verfahren nach Anspruch 1, **dadurch gekennzeichnet, dass** die zweite Identifikationsnummer (IN2, IdN) bei der direkten oder indirekten Anmeldung des betreffenden Mobilteils (H-MT1, H-MT2, H-MT3, H-MT4) an der Basisstation (BS) durch die Basisstation (BS) vergeben wird.

4. Verfahren nach einem der Ansprüche 1 bis 3, **dadurch gekennzeichnet, dass** ein Bit als die Informationseinheit (IE) benutzt wird.

5. Verfahren nach einem der Ansprüche 1 bis 4, **dadurch gekennzeichnet, dass** der zweite Informationseinheitenvorrat (IE, V2) dem ersten Informationseinheitenvorrat (IE, V1) unmittelbar nachfolgt.

6. Verfahren nach einem der Ansprüche 1 bis 5, **dadurch gekennzeichnet, dass** eine Kennung (KE) aus dem ersten Informationseinheitenvorrat (IE, V1) gebildet wird.

7. Verfahren nach Anspruch 1, 4 und 6, **dadurch gekennzeichnet, dass** die Größe des zweiten Informationseinheitenvorrates (IE, V2), je nach Typ des Kommunikationssystems (KS) mindestens zwei Bit beträgt, wobei der jeweilige Typ des Kommunikationssystems (KS) in der Kennung (KE) codiert ist.

8. Verfahren nach einem der Ansprüche 1 bis 7, **dadurch gekennzeichnet, dass** ein nach dem DECT-Standard spezifiziertes Schnurlos-Telekommunikationssystem als das Kommunikationssystem (KS) benutzt wird, wobei eine im DECT-Standard spezifizierte "Radio Fixed Part Identity" (RFPI) die Adressinformation (ADI1, ADI2'), ein im DECT-Standard spezifizierte "Access Rights Identifier" (ARI) die Kennung (KE), eine im DECT-Standard spezifizierte "Radio Fixed Part Number" (RPN) die erste Identifikationsnummer (IN1) und eine im DECT-Standard spezifizierte "Identity Number" (IdN) die zweite Identifikationsnummer (IN2) bilden und wobei die Größe des zweiten Informationseinheitenvorrates (IE, V2) drei oder acht Bit beträgt.

## Claims

1. Method for managing a communication system (KS) extending over at least one cell (FZ1, FZ2, FZ3) for wireless communication between mobile units (H-MT1, H-MT2, H-MT3, H-MT4) with direct wireless communication possibilities (DV1, DV2) limited to and/or extending over a cell synchronised to a base station (BS), with the following features:
a) from a unique address information (ADI1, ADI2', RFPI) for the management of the communication system (KS) with a first bank (V1) and a second bank (V2) of information units (IE) directly following the first bank (V1), at least one information unit (IE) of the first bank (V1), which is respectively closest to the information units (IE) of the second bank (V2), is provided for the second bank (V2) for the purposes of feature c),
b) a first identification number (IN1, RPN) used to identify base stations and/or repeaters (BS, RP1, RP2) in a cell (FZ1, FZ2, FZ3,) of the communication system (KS) is formed from the second information bank (IE, V2),
c) a second identification number (IN2, IdN) used to identify mobile units (H-MT1, H-MT2, H-MT3, H-MT4) with a direct communication capability (DV1, DV2) is formed from the second information bank (IE, V2) and from the information unit (IE) of the first information bank (IE, V1) provided for this bank (IE, V2).

2. Method according to claim 1,
**characterised in that**
the first identification number (IN1, RPN) is allocated by the system operator when the communication system (KS) is put into operation.

3. Method according to claim 1,
**characterised in that**
the second identification number (IN2, IdN) is allocated by the base station (BS) when the mobile unit in question (H-MT1, H-MT2, H-MT3, H-MT4) logs in directly or indirectly to the base station (BS).

4. Method according to one of claims 1 to 3,
**characterised in that**
one bit is used as the information unit (IE).

5. Method according to one of claims 1 to 4,
**characterised in that** the second information bank (IE, V2) directly follows the first information bank (IE, V1).

6. Method according to one of claims 1 to 5,
**characterised in that**
an identifier (KE) is formed from the first information bank (IE, V1).

7. Method according to claim 1, 4 and 6,
**characterised in that**
the size of the second information bank (IE, V2), depending on the type of the communication system (KS), has at least two bits, with the respective type of communication system (KS) being encoded in the identifier (KE).

8. Method according to one of claims 1 to 7,
**characterised in that**
a cordless telecommunication system specified according to the DECT standard is used as the communication system (KS), wherein a "Radio Fixed Part Identity" (RFPI) specified in the DECT standard forms the address information (ADI1, ADI2'), an "Access Rights Identifier" (ARI) specified in the DECT standard forms the identifier (KE), a "Radio Fixed Part Number" (RPN) specified in the DECT standard forms the first identification number (IN1) and an "Identity Number" (IdN) specified in the DECT standard forms the second identification number (IN2) and wherein the size of the second information bank (IE, V2) is three or eight bits.

## Revendications

1. Procédé pour gérer un système de communication (KS) s'étendant sur au moins une cellule (FZ1, FZ2, FZ3) pour la communication sans fil avec possibilité de communication directe sans fil (DV1, DV2) entre des éléments mobiles (H-MT1, H-MT2, H-MT3, H-MT4), de manière synchronisée avec une station de base (BS), limitée à des cellules et/ou élargie à plusieurs cellules, comprenant les caractéristiques suivantes :
a) par une information d'adressage (ADI1, ADI2', RFPI), univoque pour la gestion du système de communication (KS), comprenant une première réserve (V1) et une deuxième réserve (V2) d'unités d'information (IE) suivant la première réserve (V1),on ajoute dans le but de la caractéristique c), au moins une unité d'information (IE) de la première réserve (V1), qui est respectivement la plus proche des unités d'information (IE) dla deuxième réserve (V2), est ajoutée à la deuxième réserve (V2),
b) un premier numéro d'identification (IN1, RPN), utilisé pour l'identification de stations de base et/ou de répéteurs (BS, RP1, RP2) dans une cellule (FZ1, FZ2, FZ3) du système de communication (KS), est formé à partir de la deuxième réserve d'unités d'information (IE, V2),
c) un deuxième numéro d'identification (IN2, IdN), utilisé pour l'identification d'éléments mobiles (H-MT1, H-MT2, H-MT3, H-MT4) ayant une possibilité de communication directe (DV1, DV2), est formé à partir de la deuxième réserve d'unités d'information (IE, V2) et de l'unité d'information (IE), ajoutée à cette réserve (IE, V2), de la première réserve d'unités d'information (IE, V1).

2. Procédé selon la revendication 1, **caractérisé en ce que** le premier numéro d'identification (IN1, RPN) est attribué par l'opérateur du système lors de la mise en service du système de communication (KS).

3. Procédé selon la revendication 1, **caractérisé en ce que** le deuxième numéro d'identification (IN2, IdN), lors de l'enregistrement direct ou indirect de l'élément mobile concerné (H-MT1, H-MT2, H-MT3, H-MT4) sur la station de base (BS) est attribué par la station de base (BS).

4. Procédé selon l'une quelconque des revendications 1 à 3, **caractérisé en ce qu'**un bit est utilisé en tant qu'unité d'information (IE).

5. Procédé selon l'une quelconque des revendications 1 à 4, **caractérisé en ce que** la deuxième réserve d'unités d'information (IE, V2) suit directement la première réserve d'unités d'information (IE, V1).

6. Procédé selon l'une quelconque des revendications 1 à 5, **caractérisé en ce qu'**une identification (KE) est formée à partir de la première réserve d'unités d'information (IE, V1).

7. Procédé selon les revendications 1, 4 et 6, **caractérisé en ce que** la taille de la deuxième réserve d'unités d'information (IE, V2), selon le type du système d'information (KS), est d'au moins deux bits, le type respectif du système de communication (KS) étant codé dans l'identification (KE).

8. Procédé selon l'une quelconque des revendications 1 à 7, **caractérisé en ce qu'**un système de télécommunication sans fil, spécifié selon la norme DECT, est utilisé en tant que système de communication (KS), une « Radio Fixed Part Identity » (RFPI) spécifiée selon la norme DECT formant l'information d'adresse (ADI1, ADI2'), un « Access Rights Identifier » (ARI), spécifié selon la norme DECT, formant l'identification (KE), un « Radio Fixed Part Number » (RPN), spécifié selon la norme DECT, formant le premier numéro d'identification (IN1) et un « Identity Number » (IdN), spécifié selon la norme DECT, formant le deuxième numéro d'identification (IN2), et la taille de la deuxième réserve d'unités d'information (IE, V2) étant de trois ou huit bits.
